# EUROPEAN PATENT APPLICATION

(11) **EP 2 522 624 A1**
(43) Date of publication of application: **14.11.2012**
(21) Application number: 10842054.8
(22) Date of filing: 10.12.2010
(51) Int. Cl.: C01B 3/38, C01B 3/48, H01M 8/06

(54) **FUEL TREATMENT DEVICE**

(30) Priority: 05.01.2010 JP 2010000762
(71) Applicant: Panasonic Corporation, Kadoma-shi Osaka 571-8501 (JP)
(72) Inventor: NAKAMURA, Masatoshi, Chuo-ku Osaka 540-6207 (JP); NOBUOKA, Masaki, Chuo-ku Osaka 540-6207 (JP); TADA, Kouji, Chuo-ku Osaka 540-6207 (JP); SHIMA, Kazuya, Chuo-ku Osaka 540 -6207 (JP)
(74) Representative: Schwabe - Sandmair - Marx
(86) International application number: PCT/JP2010/007196
(87) International publication number: WO 2011/083534

(57) **Abstract**

Disclosed is a fuel treatment device which comprises an inner cylinder, an intermediate cylinder, and an outer cylinder. The outer cylinder comprises: the lower part having small bore diameter; the upper part having a bore diameter larger than that of the lower part; and the intermediate part connecting the lower part with the upper part. The intermediate part and the lower part do not comprise an all-around welded part. The fuel treatment device comprises: a heating unit disposed within the inner cylinder; an evaporation unit formed between the upper part of the inner cylinder and that of the intermediate cylinder; a reformation unit formed between the lower part of the inner cylinder and that of the intermediate cylinder; and a carbon monoxide removal unit arranged between the upper part of the intermediate cylinder and that of the outer cylinder.

## Description

### Technical Field

The present invention relates to fuel processing devices for producing a fuel gas.

### Background Art

Fuel cell systems such as residential co-generation systems have a fuel processing device configured to produce a hydrogen-containing fuel gas, and fuel cells configured to generate electricity by utilizing the fuel gas produced in the fuel processing device.

Fuel processing devices known in the art are, for example, cylindrical fuel processors that have multiple concentric cylindrical bodies (see, e.g., Patent Literatures 1 to 7).

FIG.1 is a cross-sectional view of a cylindrical fuel processing device disclosed by Patent Literature 1. As illustrated in FIG.1, cylindrical fuel processing device 1 includes inner cylinder 10, center cylinder 20 which is concentric with inner cylinder 10, outer cylinder 30 which houses therein inner cylinder 10 and center cylinder 20, and heat insulator 40 which covers outer cylinder 30.

Outer cylinder 30 consists of bottom plate 31 constituting the bottom and of a cylindrical body constituting the sidewall. The cylindrical body includes lower part 33 having a small bore diameter, upper part 35 having a large bore diameter, and flange 37 which connects upper part 35 and lower part 33. Such outer cylinder 30 is typically manufactured by joining together bottom plate 31, lower part 33, flange 37 and upper part 35 by welding.

Heater 11 constructed of a burner is disposed inside the inner cylinder. Evaporator 13 and reformer 15 are disposed between inner cylinder 10 and center cylinder 20. Moreover, reformed gas flow channel 21 and shift converter 23 are disposed between center cylinder 20 and outer cylinder 30.

The following provides a brief description of the process in which a fuel gas is produced by cylindrical fuel processing device 1.

First, source gas and water are supplied to evaporator 13. The water supplied to evaporator 13 is evaporated into steam by the heat of heater 11. In evaporator 13, the steam and source gas are mixed.

The mixed gas of source gas and steam then flows into reformer 15, where the source gas undergoes a steam-reforming reaction by the catalytic action of a reformer catalyst to produce a reformed gas containing hydrogen and carbon monoxide.

The reformed gas produced in reformer 15 flows into reformed gas flow channel 12, and then into shift converter 23. In shift converter 23, some of the carbon monoxide in the reformed gas is removed by the CO shift reaction. The reformed gas deprived of carbon monoxide in shift converter 23 is mixed with air, which contains oxygen, and then flows into selective oxidizer 25. In selective oxidizer 25, carbon monoxide in the reformed gas is reacted with oxygen by the catalytic action of a CO selective catalyst, whereby carbon monoxide is further removed from the reformed gas to produce a fuel gas.

Thus, during operation, the fuel processing device is entirely heated by the heat of the heater. Since the heater intensively heats reformer 15 during operation, the temperature of the bottom part of the fuel processing device rises (600°C to 800°C) compared to the top part (100°C to 200°C).

Other known methods of manufacturing outer cylinders involves joining together cylindrical bodies and bottom plates without using any welding technique (see, e.g., Patent Literature 8).

### Citation List

### Patent Literature

[PTL 1] Japanese Patent Application Laid-Open No.2007-331985
[PTL 2] Japanese Patent No.4145785
[PTL 3] Japanese Patent Application Laid-Open No.2006-96597
[PTL 4] Japanese Patent Application Laid-Open No.2009-274938
[PTL 5] U.S Patent Application Publication No.2004/0144029
[PTL 6] U.S Patent Application Publication No.2007/0151152
[PTL 7] U.S Patent Application Publication No.2004/0115494
[PTL 8] Japanese Patent Application Laid-Open No.2003-160301

### Summary of Invention

### Technical Problem

Residential co-generation systems that incorporate a fuel processing device such as that described above undergo repeated cycles of turning on and off, as they are turned on and off depending on the user's needs for power. Consequently, the fuel processing device incorporated in the residential co-generation system likewise undergoes repeated cycles of turning on and off. The temperature of the fuel processing device rises as high as to 100°C to 800°C during operation, and drops to normal temperature during the stop time. Accordingly, the fuel processing device incorporated in the residential co-generation system is frequently exposed to temperature changes.

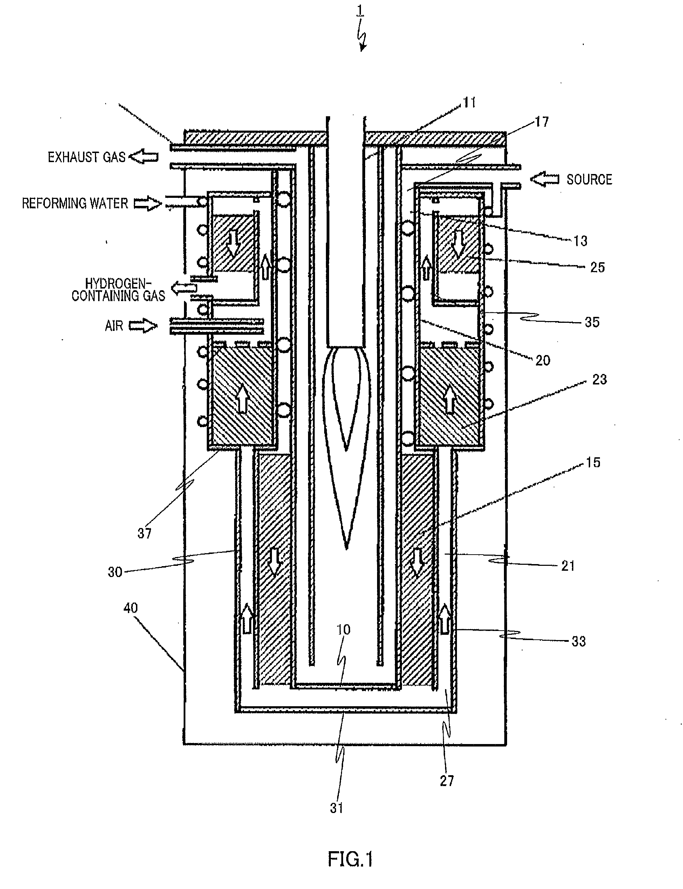

In particular, among individual parts of fuel processing device 1 illustrated in FIG.1, outer cylinder 30 positioned closer to the external environment is cooled most rapidly as soon as the operation of the fuel processing device is stopped. Moreover, the temperature of the bottom part of outer cylinder 30 becomes highest (approximately 800°C) during operation. Thus, the largest temperature changes take place in the bottom part of outer cylinder 30.

When an outer cylinder manufactured by the welding of separate components, such as outer cylinder 30 of conventional fuel processing device 1 illustrated in FIG.1, is exposed to such large temperature changes, deformation and generation of stress due to temperature changes mainly take place in welded joints, resulting in the deterioration of the welded joints. Deterioration of welded joints has led to the problem of being unable to keep the outer cylinder air tight.

A possible approach to solve such a problem may be to join together a cylindrical body and a bottom plate without using any welding technique (see, e.g., Patent Literature 8). However, even when they are joined together without welding, a stress caused by temperature changes concentrates in the joint, leading to joint deterioration.

Since outer cylinders of conventional fuel processing devices are vulnerable to temperature changes as described above, the devices have a short life when incorporated in residential co-generation systems that undergo a large number of repeated cycles of turning on and off.

The present invention has been made to solve the foregoing problem pertinent in the art, and an object of the present invention is to provide a fuel processing device that is resistant to temperature changes.

### Solution to Problem

The inventor has established that the durability of a fuel processing device can be enhanced by eliminating the presence of any all-around joined portion from areas of the outer cylinder that undergo intense temperature changes. With additional studies, the inventor has completed the invention.

Specifically, the present invention relates to fuel processing devices given below.
[1] A fuel processing device including:
   an inner cylinder having a bottom;
   a center cylinder having no bottom, the center cylinder surrounding the inner cylinder and being disposed concentric with the inner cylinder;
   an outer cylinder having a bottom, the outer cylinder surrounding the center cylinder and being disposed concentric with the inner cylinder and the center cylinder, wherein the outer cylinder includes a lower part, a center part and a upper part, the lower part including the bottom of the outer cylinder, the upper part having a larger bore diameter than the lower part and including an end opposite the bottom of the outer cylinder, the center part connecting together the lower part and the upper part, the center part and the lower part being free from any all-around welded joint;
   a heater disposed inside the inner cylinder;
   an evaporator configured to mix a steam and a methane-containing source gas to produce a mixed gas, the evaporator disposed between a upper part of the inner cylinder and a upper part of the center cylinder;
   a reformer configured to convert the mixed gas into a reformed gas by a steam-reforming reaction, the reformer disposed between a lower part of the inner cylinder and a lower part of the center cylinder; and
   a CO remover configured to remove carbon monoxide from the reformed gas, the CO remover disposed between the upper part of the center cylinder and the upper part of the outer cylinder.
[2] The fuel processing device according to [1], wherein the center part and the lower part of the outer cylinder are integrally manufactured by drawing of a single metal plate.
[3] The fuel processing device according to [1] or [2], wherein the upper part, the center part and the lower part of the outer cylinder are integrally manufactured by drawing of a single metal plate.
[4] The fuel processing device according to [1] or [2], wherein the outer cylinder has the all-around welded joint between the center part and the upper part.
[5] The fuel processing device according to any one of [1] to [4], wherein the lower part of the outer cylinder has a bent portion connecting together a sidewall and the bottom of the outer cylinder, and the bent portion has a curvature radius of 2 mm or more.
[6] The fuel processing device according to any one of [1] to [5], wherein the center part of the outer cylinder has a bent portion, and the bent portion has a curvature radius of 2 mm or more.
[7] The fuel processing device according to any one of [1] to [6], wherein the reformer and the CO remover are spaced apart from each other in an axial direction of the inner cylinder.

### Advantageous Effects of Invention

The present invention enables to provide a long-life fuel processing device that is resistant to temperature changes.

### Brief Description of Drawings

FIG.1 is a cross-sectional view of a conventional fuel processing device;
FIG.2 is a flow chart of the production process of a fuel gas by a fuel processing device according to an embodiment of the present invention;
FIG.3 is a cross-sectional view of a fuel processing device according to Embodiment 1;
FIG.4 is a cross-sectional view of a fuel processing device according to Embodiment 1;
FIG.5 is a partially enlarged view of a fuel processing device according to Embodiment 1;
FIGs.6A to 6D illustrate a manufacturing process of an outer cylinder according to Embodiment 1;
FIGs.6E to 6H illustrate a manufacturing process of an outer cylinder according to Embodiment 1;
FIGs.6I to 6L illustrate a manufacturing process of an outer cylinder according to Embodiment 1;
FIG.7 is a cross-sectional view of a fuel processing device according to Embodiment 2; and
FIG.8 illustrates a manufacturing process of an outer cylinder according to Embodiment 2.

### Description of Embodiments

### 1. Components of fuel processing device

A fuel processing device of the present invention is a cylindrical fuel processor that steam-reforms a hydrocarbon fuel such as city gas or LPG to produce a fuel gas containing hydrogen as a primary component. The fuel processing device includes 1) an inner cylinder, 2) a center cylinder, and 3) an outer cylinder. Each component will be described below.

### 1) Inner cylinder

The inner cylinder is a cylindrical body having a bottom. A heater constructed of, for example, a burner is disposed inside the inner cylinder. The inner cylinder may include therein a flow channel configured to allow a combustion gas generated by the heater to flow. The bore diameter of the inner cylinder ranges, for example, from 40 to 70 mm.

### 2) Center cylinder

The center cylinder is a cylindrical body having a larger bore diameter than the inner cylinder and surrounding the inner cylinder. The center cylinder is concentric with the inner cylinder. Annular space is arranged in a gap between the inner cylinder and center cylinder. An evaporation channel and a reformer (both later described) are arranged in the space between the inner cylinder and center cylinder. Unlike the inner cylinder, the center cylinder has no bottom. The bore diameter of the center cylinder ranges, for example, from 60 to 100 mm, which is 20 to 30 mm larger than the bore diameter of the inner cylinder. The bore diameter of the center cylinder may or may not be constant over the length.

### 3) Outer cylinder

The outer cylinder is a cylindrical body having a larger bore diameter than the center cylinder and surrounding the center cylinder. The outer cylinder is concentric with the inner cylinder and center cylinder. Annular space is formed between the center cylinder and outer cylinder. A reformed gas flow channel and a CO remover (both later described) are arranged in the space between the center cylinder and outer cylinder.

The inner bottom surface of the outer cylinder is spaced from the inner cylinder and center cylinder, whereby a gap is formed between the inner bottom surface of the outer cylinder and the inner and center cylinders. This space serves a region where gas flow makes a U-turn (later described). Typically, plates and bottom plate for the outer cylinder each range from 0.8 to 1.2 mm in thickness.

The outer cylinder has a lower part, a upper part, and a center part. The lower part has a small bore diameter, and includes the bottom of the outer cylinder. The bore diameter of the lower part of the outer cylinder ranges from 65 to 110 mm, which is 5 to 10 mm larger than the bore diameter of the center cylinder. The length of the lower part of the outer cylinder ranges from 180 to 300 mm in the axial direction.

The upper part of the outer cylinder has a large bore diameter, and includes an end opposite the bottom of the outer cylinder (i.e., top end). The bore diameter of the upper part of the outer cylinder ranges from 120 to 180 mm, which is 60 to 80 mm larger than the bore diameter of the center cylinder, The length of the upper part of the outer cylinder ranges from 150 to 200 mm in the axial direction.

The center part of the outer cylinder connects together the lower and upper parts of the outer cylinder. The length of the center part of the outer cylinder ranges from 10 to 30 mm in the axial direction.

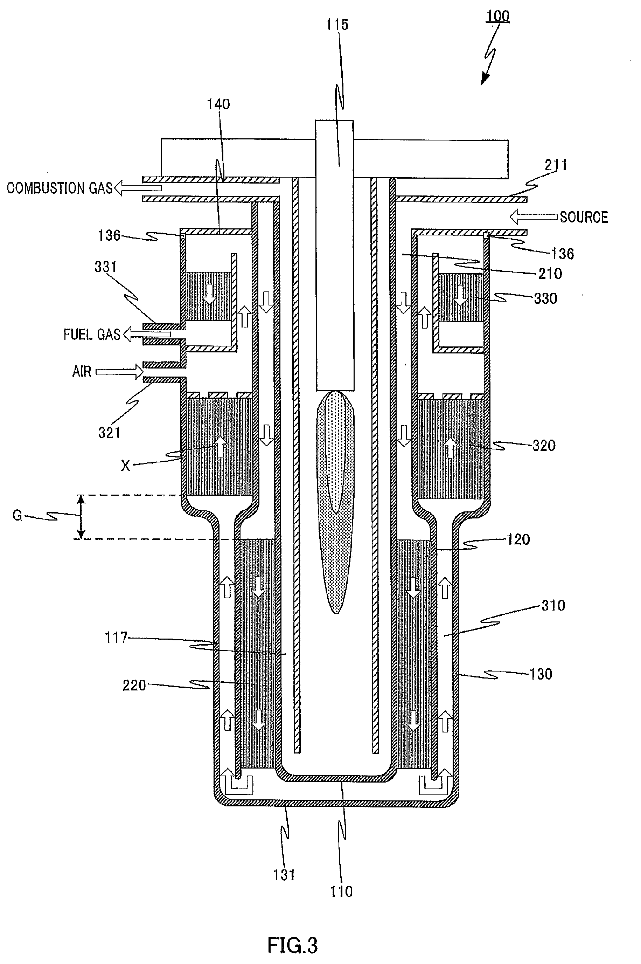

Thus, in the present invention, the upper and lower parts of the outer cylinder have different bore diameters. Consequently, the center part of the outer cylinder, which connects together the upper and lower parts of the outer cylinder, has a varying bore diameter (see FIG.3).

In the present invention, at least center and lower parts of the outer cylinder are free from any all-around welded joint. As used herein, "all-around welding" means to weld the entire circumference of two members to be joined together. Thus, specific examples of the "all-around welded joint" are welding seams formed by all-around welding, such as a welding seam formed between the sidewall and bottom of the outer cylinder, a welding seam formed between the center part and upper part of the outer cylinder, and a welding seam formed between the outer cylinder and flange (see FIG.3),

Moreover, the expression "center and lower parts of the outer cylinder and the bottom plate are free from any all-around welded joint" means that "center and lower parts of the outer cylinder are each free from any all-around welded joint" and that "no all-around welded joint is formed between the center and lower parts of the outer cylinder."

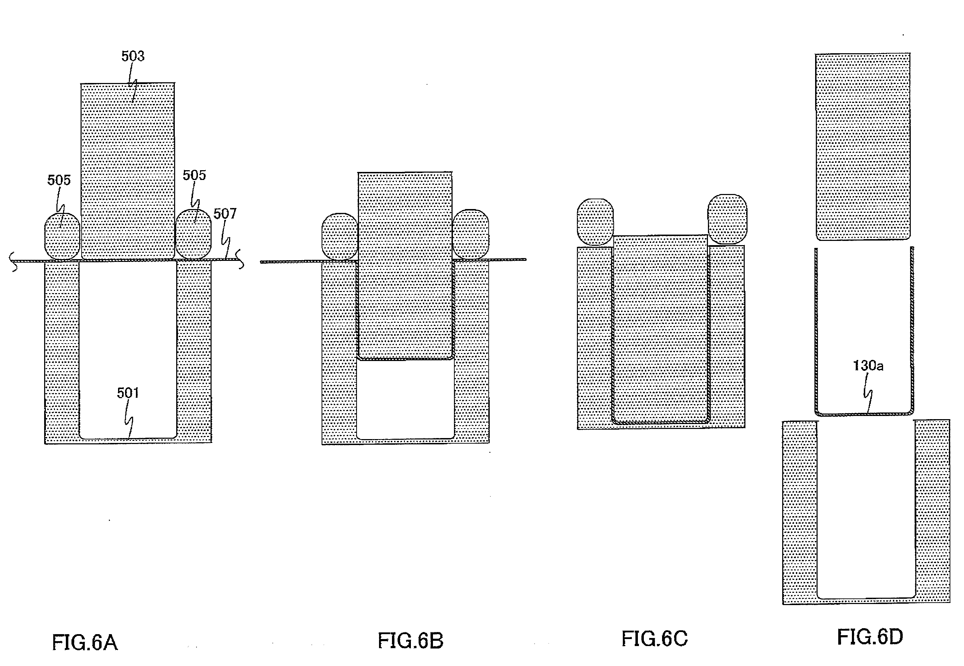

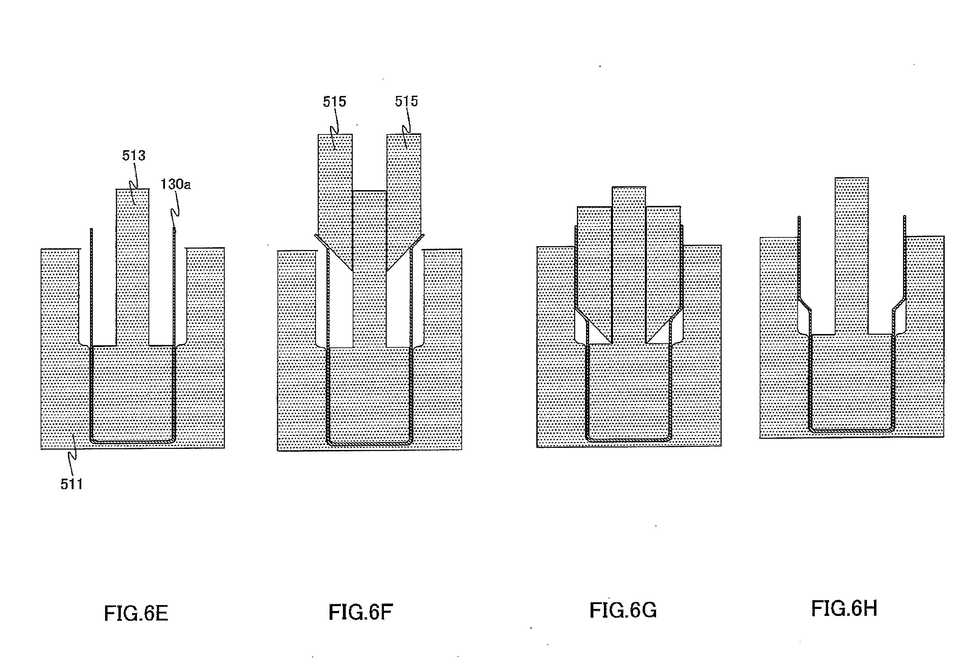

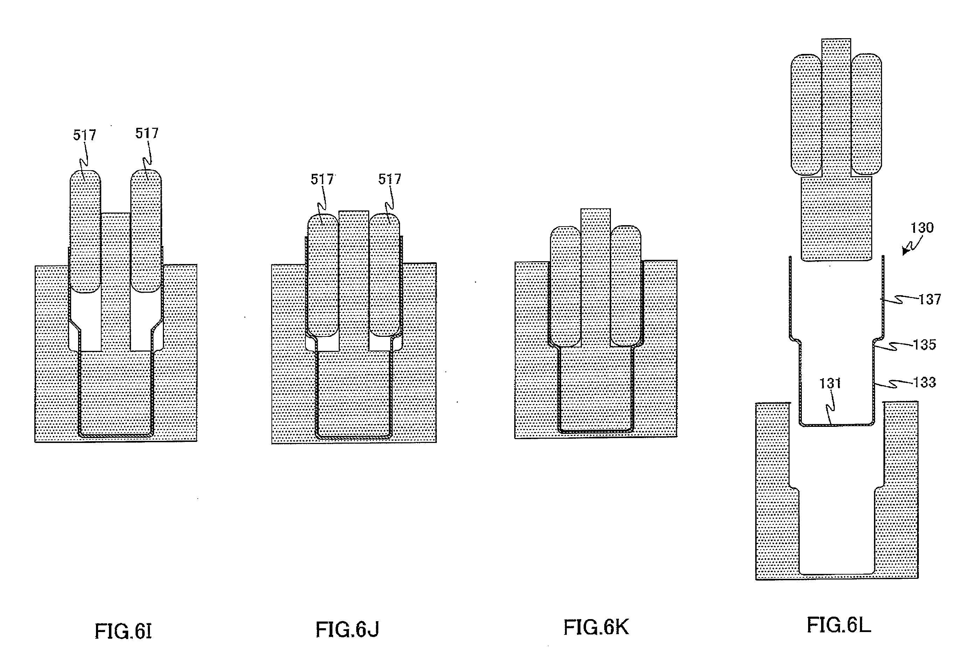

In the present invention where center and lower parts of the outer cylinder are free from any all-around welded joint, the center and lower parts of the outer cylinder may be manufactured either by cutting or drawing, but is preferably manufactured by drawing in view of manufacturing costs. Specifically, center and lower parts of the outer cylinder are preferably manufactured integrally by drawing of a single metal plate (hereinafter may simply referred to as "integrally manufactured by drawing"; see FIG.6). As used herein, "drawing" means a kind of plastic working of metals, where a single blank is transformed into bowl form through a single process. Thus, in the present invention, lower and center parts of the outer cylinder are not welded together.

The thickness of a metal plate, which is transformed into an outer cylinder having center and lower parts in a drawing process, ranges, for example, from 0.8 to 1.2 mm. There is a need to consider a thickness reduction that takes places during a drawing process; a metal plate having a thickness of less than 0.8 mm may result in an excessively thin outer cylinder.

The metal plate is preferably made of austenitic stainless steel. Because the fuel processing device is heated to high temperatures during operation as described above, it is preferred to increase the heat resistance of the fuel processing device by employing austenitic stainless steel, which has high heat resistance, as the material of a metal plate for the outer cylinder. Moreover, austenitic stainless steels have higher ductility than other stainless steels (e.g., ferritic stainless steels). Thus, employing austenitic stainless steel as the metal plate material is also preferable in terms of achieving high processability.

Unfortunately, however, integral manufacture of lower and center parts of an outer cylinder by drawing has encountered the problem of a residual stress generated in bent portions of the outer cylinder, leading to season cracking in some cases. As used herein, "season cracking" means cracking that occurs over time in a member having a residual stress.

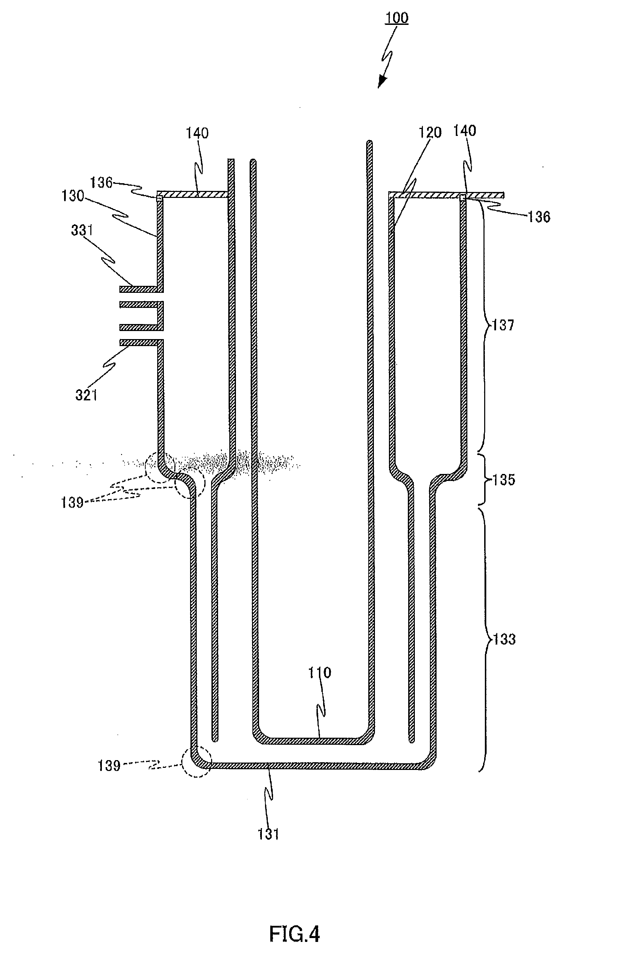

The present inventor has established that proper adjustment of the curvature of bent portions of the outer cylinder allows for the reduction of the residual stress in the bent portions, preventing possible season cracking. As used herein, "bent portion of an outer cylinder" means a bent portion that connects together the sidewall and bottom of the lower part of an outer cylinder, and a bent portion in the center part of an outer cylinder where the bore diameter changes (see FIG.4, bent portion 139).

For example, when the thickness of a plate for the outer cylinder ranges from 0.8 to 1.2 mm, a bent portion of the outer cylinder preferably has a curvature radius of 2 mm or more. A curvature radius of less than 2 mm may result in the generation of a residual stress in the bent portion that leads to possible season cracking in the outer cylinder. More specifically, the bent portion that connects together the sidewall and bottom of the lower part of the outer cylinder has a curvature radius of approximately 8 mm, and the bent portion in the center part of outer cylinder has a curvature radius of approximately 4 mm. By adjusting the curvature radius of bent portions of the outer cylinder to be manufactured, it is possible to obtain an outer cylinder having lower and center parts that are integrally manufactured by drawing and yet free from any all-around welded joint, while preventing season cracking.

On the other hand, when bent portions have an excessively large curvature radius, the outer cylinder becomes lengthy in the axial direction. Moreover, since it is difficult to control the bore diameter of the outer cylinder at bent portions, a shelf or other member for supporting thereon catalyst in a CO remover (later described) cannot be provided at the bent portions, Thus, when bent portions have an excessively large curvature radius, the fuel processing device becomes unnecessarily lengthy and therefore becomes large. Such a large-sized fuel processing device is not suitable as a fuel processing device to be incorporated into co-generation systems for which further downsizing has been demanded.

Moreover, when bent portions have a large curvature radius, the outer cylinder has a large surface area and therefore the fuel processing device dissipates more heat. Thus, larger amounts of heat insulator are required, resulting in higher costs for heat insulation.

For the reasons mentioned above, it is not preferable for bent portions of the outer cylinder to have an excessively large curvature radius. More specifically, bent portions preferably have a curvature radius of 12 mm or less.

Furthermore, it is preferable in the present invention that all of the outer cylinder members (upper, center and lower parts) be integrally manufactured by drawing (see Embodiment 1). In some cases, however, it is difficult to manufacture an outer cylinder by drawing of a single metal plate because the outer cylinder has a certain length in the axial direction. To solve this problem, in the present invention, the outer cylinder may be manufactured by manufacturing the center and lower parts separately from the upper part, and then joining the upper part to the center part by all-around welding (see Embodiment 2). In the case where the upper part is jointed to the center part by all-around welding, the outer cylinder may have an all-around welded potion formed between the center and upper parts,

Since the fuel processing device of the present invention includes an outer cylinder having center and lower parts that are free from any all-around welded joint as described above, it is highly resistant to temperature changes and therefore has long life (later described).

### 2. Structure of fuel processing device

The following provides a description of the structure of a fuel processing device of the present invention. As described above, the fuel processing device includes 1) an evaporator, 2) a reformer, and 3) a CO remover.

### 1) Evaporator

In the evaporator, methane-containing source gas, such hydrocarbon fuel (e.g., city gas or LPG) and water are heated, whereby the source gas and steam are mixed. The evaporator is arranged between the upper part of the inner cylinder and the upper part of the center cylinder. Preferably, the evaporator is formed as a helical channel that winds around the exterior surface of the inner cylinder. Formation of such a helical channel between the inner and center cylinders may be accomplished by, for example, providing in a space between the inner and center cylinders a helical guide member that winds around the exterior surface of the inner cylinder.

An evaporator formed as a helical channel is lengthy and therefore prolonged residence time of the flow of source gas and water can be ensured in the evaporator. Prolonged residence time of the flow of source gas and water in the evaporator facilitates evaporation of water; evaporated water (steam) is more miscible with the source gas.

### 2) Reformer

The reformer produces, from the mixed gas of source gas and steam produced in the evaporator, a reformed gas by the steam-reforming reaction. The reformed gas contains hydrogen as a primary component. The reformer is arranged between the lower part of the inner cylinder and the lower part of the center cylinder. Moreover, since the reforming reaction is endothermic, the reformer is arranged in such a way that it surrounds the lower part of the inner cylinder that is heated to high temperatures during operation (see FIG.3). With this configuration in which the reformer surrounds the lower part of the inner cylinder, heating of the reformer is facilitated and thereby the efficiency of the reforming reaction is enhanced. The reformer contains therein a metal-based reforming catalyst such as Ni-based catalyst or Ru-based catalyst,

### 3) CO remover

The CO remover is arranged between the upper part of the outer cylinder and the upper part of the center cylinder, and removes carbon monoxide from the reformed gas produced in the reformer, The CO remover also surrounds the evaporator. The CO removing reaction is exothermic. Thus, with this configuration in which the CO remover surrounds the evaporator, the CO remover can supply heat to the evaporator during operation.

The CO remover includes: a shift converter for reducing the CO level in the reformed gas to approximately 0.5% by the CO shift reaction using a CO shift catalyst; and a selective oxidizer for further reducing the CO level in the reformed gas to approximately below 10 ppm by the selective oxidization reaction using a CO selective oxidization catalyst. An air supplier for supplying air to reformed gas is provided between the shift converter and selective oxidizer.

The reformer and CO remover are connected together by a reformed gas flow channel formed between the lower part of the outer cylinder and the lower part of the center cylinder,

The reformer and CO remover are preferably spaced apart from each other in the axial direction of the inner cylinder (see FIG.3). By spacing the reformer and CO remover apart from each other in this way, deterioration of the fuel processing device can be suppressed (see Embodiment 1).

### 3. Production of fuel gas by fuel processing device

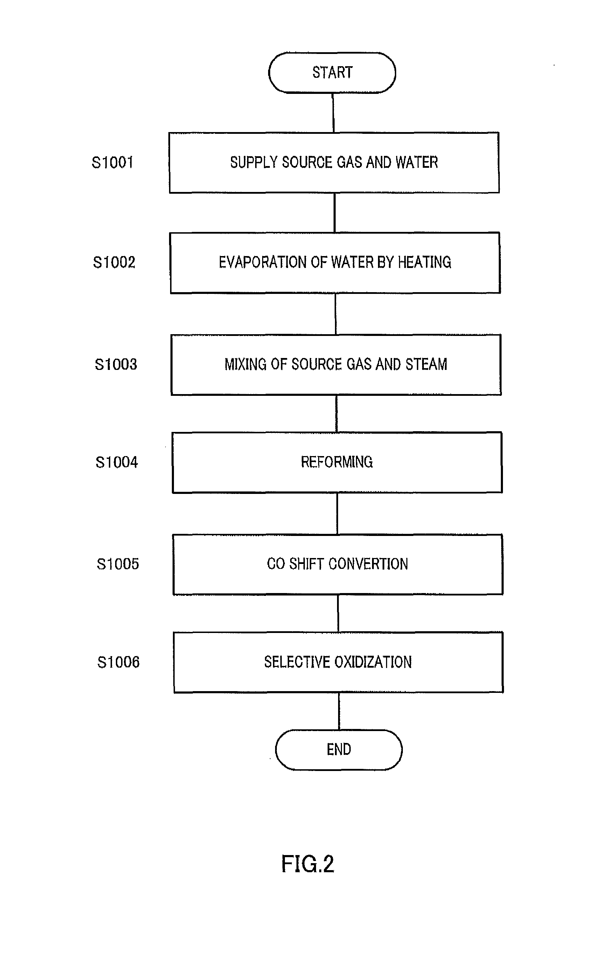

With reference to FIG.2, the following provides a description of the production process of a fuel gas by a fuel processing device of the present invention.

First, source gas and water are supplied into a first gas flow channel, or evaporator (S1001). The source gas and water supplied into the evaporator are heated by the heat from the heater while flowing through the evaporator (S1002). As a consequence, the water is evaporated into steam and mixed with the source gas (S1003).

The heated source gas and steam then flow into the reformer, where the source gas, undergoes a steam-reforming reaction by the catalytic action of a reformer catalyst to produce a reformed gas (S1004).

The flow of reformed gas produced in the reformer makes a U-turn in a gap between the bottom of the outer cylinder and the inner and center cylinders (see FIG.3), and flows into the reformed gas flow channel. The reformed gas then flows into the shift converter of the CO remover. In the shift converter, some of the carbon monoxide in the reformed gas is removed by the CO shift reaction (S1005). The reformed gas deprived of carbon monoxide in the shift converter is mixed with air containing oxygen, which is supplied from the air supplier, and flows into the selective oxidizer of the CO remover. In the selective oxidizer, carbon monoxide in the reformed gas is reacted with oxygen by the catalytic action of a CO selective catalyst to further remove carbon monoxide from the reformed gas (S1006). The reformed gas deprived of carbon monoxide in the CO remover (fuel gas) flows out from the CO remover. In this way, fuel gas is produced,

As described above, the body of fuel processing device is heated to high temperatures by the heat from the heater during operation. In particular, the temperature of bottom parts of the inner cylinder and outer cylinder, which are intensively heated by the heater during operation, becomes highest (approximately 800°C). On the other hand, the temperature of the fuel processing device drops to normal temperature during the stop time,

Accordingly, fuel processing devices incorporated in residential co-generation systems that undergo repeated cycles of turning on and off are frequently exposed to temperature changes, In particular, the outer cylinder positioned closer to the external environment is cooled most rapidly as soon as the operation of the fuel processing device is stopped. Moreover, as described above, the temperature of the bottom part of the outer cylinder becomes highest during operation. Accordingly, intensive temperature changes take place in the lower part of the outer cylinder, and therefore, among the parts of the outer cylinder, the lower part experiences the largest stress caused by temperature changes.

In the present invention, center and lower parts of the outer cylinder, which are exposed to intense temperature changes during operation, are integrally manufactured by drawing and therefore are free from any all-around welded joint. Thus, the outer cylinder according to the present invention has high resistance to stress caused by temperature changes.

By contrast, in the case of a conventional fuel processing device where the bottom plate and sidewall of the lower part of the outer cylinder, as well as the center and upper parts of the outer cylinder are welded together (see FIG.1), a stress caused by temperature changes is more likely to cause deterioration of the welded joint between, for example, the bottom plate and sidewall of the lower part of the outer cylinder and between the center and lower parts of the outer cylinder, thus causing cracks in outer cylinder.

The present invention thus enables to increase the resistance of the outer cylinder to temperature changes, whereby a long-life fuel processing device can be provided.

Embodiments of the present invention will be described below with reference to the accompanying drawings.

### [Embodiment 1]

FIG.3 is a cross-sectional view of fuel processing device 100 according to Embodiment 1. As illustrated in FIG.3, fuel processing device 100 according to Embodiment 1 includes inner cylinder 110, center cylinder 120, and outer cylinder 130.

Fuel processing device 100 further includes: heater 115 disposed inside inner cylinder 110; combustion gas flow channel 117 configured to allow combustion gas generated by heater 115 to flow; evaporator 210; reformer 220; reformed gas flow channel 310; and a CO remover that includes shift converter 320 and selective oxidizer 330.

Arrows X in FIG.3 indicate the gas flow direction. As illustrated in FIG.3, source gas and water are first supplied from source supply inlet 211 into evaporator 210. The source gas and water supplied into evaporator 210 are heated by heater 115 while flowing through evaporator 210. As a consequence, the water is evaporated into steam and mixed with the source gas.

The heated source gas and steam then flow into reformer 220, where the source gas undergoes a steam-reforming reaction by the catalytic action of a reformer catalyst to produce a reformed gas.

The reformed gas produced in reformer 220 makes a U-turn in a gap between bottom 131 of outer cylinder 130 and inner and center cylinders 110,120, and flows into reformed gas flow channel 310. The reformed gas then flows into shift converter 320, where some of the carbon monoxide in the reformed gas is removed by the CO shift reaction. The reformed gas deprived of carbon monoxide in shift converter 320 is mixed with air containing oxygen, which is supplied from air supply inlet 321, and flows into selective oxidizer 330. In selective oxidizer 330, carbon monoxide in the reformed gas is reacted with oxygen by the catalytic action of a CO selective catalyst to further remove carbon monoxide from the reformed gas. The reformed gas deprived of carbon monoxide then flows out from outlet 331 as a fuel gas.

In the present embodiment, reformer 220 and CO remover (shift converter 320) are spaced apart from each other in the axial direction of inner cylinder 110 to form gap G between reformer 220 and shift converter 320 along the axial direction of inner cylinder 110. The size of gap G ranges preferably from 5 to 150 mm in length in the axial direction of inner cylinder 110. By forming such a gap between reformer 220, which catalyzes an endothermic reaction, and shift converter 320, which catalyzes an exothermic reaction, deterioration of the fuel processing device can be suppressed.

As described above, reformer 220 catalyzes an endothermic reaction, whereas the CO remover (shift converter 320) catalyzes an exothermic reaction. Thus, if reformer 220 and CO remover (shift converter 320) overlap in the axial direction of inner cylinder 110, the overlapping areas of the center cylinder and outer cylinder are exposed to temperature difference between reformer 220 and shift converter 320. Thus, when reformer 220 and shift converter 320 overlap in the axial direction of inner cylinder 110, the overlapping areas of the center cylinder and outer cylinder are prone to deterioration due to stress caused by temperature difference.

On the other hand, when reformer 220 and CO remover (shift converter 320) are spaced apart from each other in the axial direction of inner cylinder 110 as in the present embodiment, no areas are formed that are exposed to intense temperature difference. Thus, by spacing reformer 220 and CO remover (shift converter 320) apart from each other, it is possible to suppress the deterioration of the center cylinder and outer cylinder, which deterioration is caused by temperature difference between reformer 220 and shift converter 320.

Fuel processing device 100 according to the present embodiment is characterized in the structure of inner cylinder 110, center cylinder 120, and outer cylinder 130. With reference to FIG.4, the structure of inner cylinder 110, center cylinder 120 and outer cylinder 130 will be described below. In Fig.4, heater 115, combustion gas flow channel 117, reformer 220, shift converter 320, and selective oxidizer 330 are not illustrated for the purpose of simplicity.

Inner cylinder 110 consists of a cylindrical body constituting the sidewall, and of a bottom plate constituting the bottom. In the present embodiment, inner cylinder 110 is preferably manufactured by drawing of a single metal plate so as to be free from any all-around welded joint.

Center cylinder 120 is concentric with inner cylinder 110, and has a larger bore diameter than inner cylinder 110. Unlike inner cylinder 110, center cylinder 120 has no bottom. In the present embodiment, the lower part of center cylinder 120 has a large bore diameter, whereas the upper part of center cylinder 120 has a small bore diameter. More specifically, a part of center cylinder 120, which is surrounded by upper part 137 of the outer cylinder (later described), has a small bore diameter; and a part of center cylinder 120, which is surrounded by lower part 133 of the outer cylinder, has a large bore diameter. In the present embodiment, center cylinder 120 is preferably free from any all-around welded joint.

Outer cylinder 130 surrounds both inner cylinder 110 and center cylinder 120, and has bottom plate 131. Outer cylinder 130 consists of lower part 133 having a small bore diameter; upper part 137 having a large bore diameter; and center part 135 that connects together lower part 133 and upper part 137. Center part 135 of outer cylinder 130 has a varying bore diameter.

In the present embodiment, lower part 133, center part 135 and upper part 137 of outer cylinder 130 are integrally manufactured by drawing. Flange 140 that connects outer cylinder 130 to center cylinder 120 is welded to the top end of outer cylinder 130. Thus, in the present embodiment, only the connection between the top end of outer cylinder 130 and flange 140 has all-around welded joint 136. Thus, in the present embodiment, none of center part 135 and lower part 133 of outer cylinder 130 and bottom plate 131 has all-around welded joint.

The end of outer cylinder 130, opposite bottom plate 131, is heated to as low as 100°C to 150°C during operation; therefore the temperature change is small. Thus, all-around welded joint 136 formed between the top end of outer cylinder 130 and flange 140 is less likely to experience stress caused by temperature changes, and therefore, is less prone to deterioration.

Moreover, the present embodiment is characterized in the curvature radius of bent portions 139 of outer cylinder 130. As illustrated in FIG.4, outer cylinder 130 has two bent portions 139 at center part 135, and at lower part 133 one bent portion 139 that connects the sidewall to bottom plate 131.

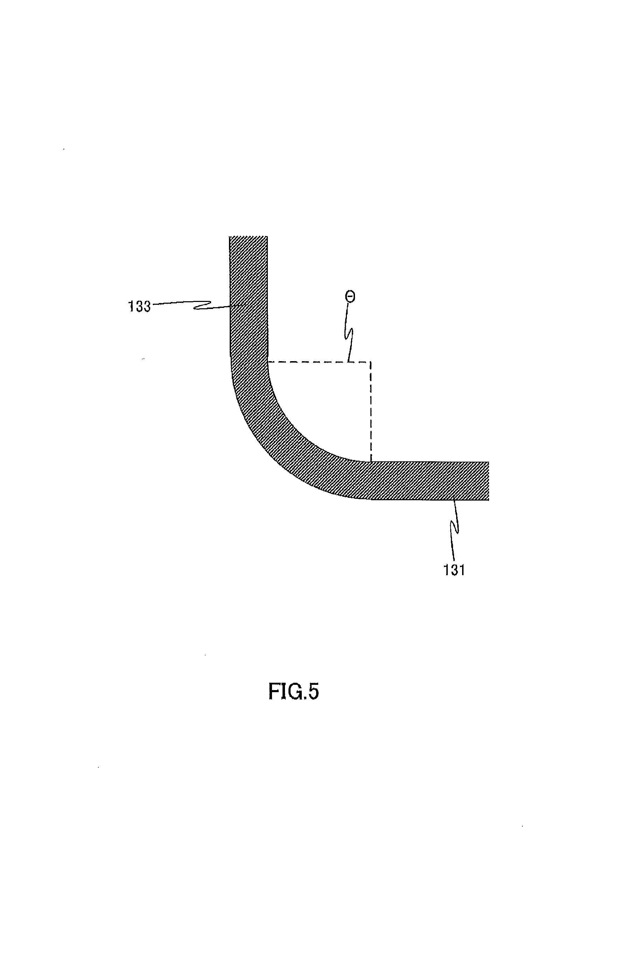

FIG.5 is an enlarged view of bent portion 139 illustrated in FIG.4 at the connection between lower part 133 of outer cylinder 130 and bottom plate 131. The curvature radius θ of bent portion 139 illustrated in FIG.5 is not less than 2 mm; it is approximately 8 mm. Preferably, the curvature radius of the bent portions of inner cylinder 110 and center cylinder 120 is adjusted similarly. By adjusting the curvature radius θ of bent portions 139 of outer cylinder 130 in this way, it is possible to reduce the residual stress in the bent portions, allowing for monolithic manufacturing of an outer cylinder by means of drawing, while preventing possible season cracking of the outer cylinder.

Outer cylinder 130 having such a structure is manufactured by drawing of a single metal plate. A method of manufacturing outer cylinder 130 includes at least the steps of: 1) manufacturing an outer cylinder having a cylindrical body having a constant bore diameter; and 2) enlarging the bore diameter of a upper part of the outer cylinder. With reference to FIGs.6A to 6L, the method of manufacturing outer cylinder 130 will be described.

FIGs.6A to 6D illustrate a step of manufacturing outer cylinder 130a having a constant bore diameter. As illustrated in FIG,6A, the step of manufacturing outer cylinder 130a first involves placing metal plate 507, which is coated with metalworking fluid, between die 501 and punch 503 and blank holder 505.

Next, as illustrated in FIG.6B, punch 503 is pushed into die 501 while holding metal plate 507 against blank holder 505, whereby metal plate 507 is drawn into die 501.

Next, as illustrated in FIG.6C, punch 503 is further pushed into die 501, whereby metal plate 507 is completely drawn into die 501. In this way outer cylinder 130a is manufactured.

Next, as illustrated in FIG.6D, outer cylinder 130a is taken out from die 501. As described above, lower and upper parts of outer cylinder 130a have the same bore diameter.

FIGs.6A to 6D illustrate an example of the manufacturing method in which outer cylinder 130a is manufactured from metal plate 507 through a single drawing process. Alternatively, metal plate 507 may be drawn into the die little by little through repeated drawing processes.

FIGs.6E to 6L illustrate a step of completing outer cylinder 130 by enlarging the bore diameter of the upper part of outer cylinder 130a. As illustrated in FIG.6E, the step of enlarging the bore diameter of the upper part of the outer cylinder first involves fitting punch 513, contoured to a design of outer cylinder 130a, into outer cylinder 130a, and then pushing outer cylinder 130a and punch 513 into die 511.

As illustrated in FIGs.6F and 6G, wedge-shaped punch 515 is then pushed into die 511 to widen the opening of outer cylinder 130a (FIG.6H).

After widening the opening of outer cylinder 130a to some extent using wedge-shaped punch 515, flat-bottomed punch 517 is pushed into die 511 (FIGs.6I and 6J). Thus, the present embodiment is characterized in that the bore diameter of the upper part of the outer cylinder is first enlarged to some extent using wedge-shaped punch 515, and then further enlarged using flat-bottomed punch 517. By enlarging the bore diameter of the upper part of the outer cylinder in multiple steps in this way, it is possible to reduce the stress placed on bent portions. Punch 517 is then completely pushed into die 511 to widen the opening of outer cylinder 130a to a desired opening size. In this way, outer cylinder 130 is manufactured that includes lower part 133 having a small bore diameter, upper part 137 having a large bore diameter, and center part 135 that connects lower part 133 to upper part 137 (FIG.6K),

Outer cylinder 130 is then taken out from die 511 to provide outer cylinder 130, which is manufactured by drawing of a single metal plate (FIG.6L).

As described above, the outer cylinder according to the present embodiment is free from any all-around welded joint in areas that are exposed to large temperature changes and is therefore highly resistant to temperature changes. Moreover, since inner and center cylinders are also monolithically manufactured in the present embodiment, they have high resistance to stress caused by temperature changes. Thus, according to the present embodiment, it is possible to provide a processing device that is highly resistant to temperature changes and has long life.

### [Embodiment 2]

Embodiment 1 is directed to an embodiment where an outer cylinder is manufactured by drawing of a single metal plate. Embodiment 2 is directed to an embodiment where lower and center parts of an outer cylinder are manufactured separately from a upper part and then the upper part is joined to the center part.

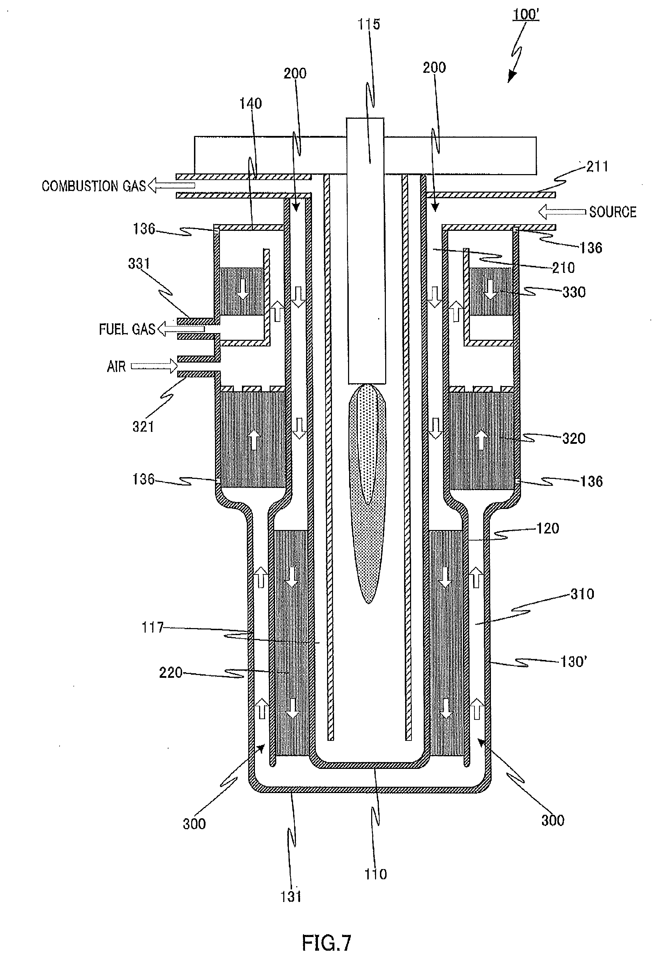

FIG.7 is a cross-sectional view of fuel processing device 100' according to Embodiment 2. Fuel processing device 100' according to Embodiment 2 is identical to fuel processing device 100 except that outer cylinder 130' has an all-around welded joint between upper and center parts. Accordingly, elements that are identical to those of fuel processing device 100 according to Embodiment 1 are given the same reference signs as those given for the elements of fuel processing device 100, and description for such elements is not provided herein.

As illustrated in FIG.7, outer cylinder 130' has all-around welded joint 136 between upper part 137 and center part 135.

The area between upper part 137 and center part 135 of outer cylinder 130' is heated to as low as 150°C to 300°C during operation; therefore the temperature change is small in this area. Thus, all-around welded joint 136 formed between upper part 137 and center part 135 of outer cylinder 130' is less likely to experience stress caused by temperature changes, and therefore, is less prone to deterioration.

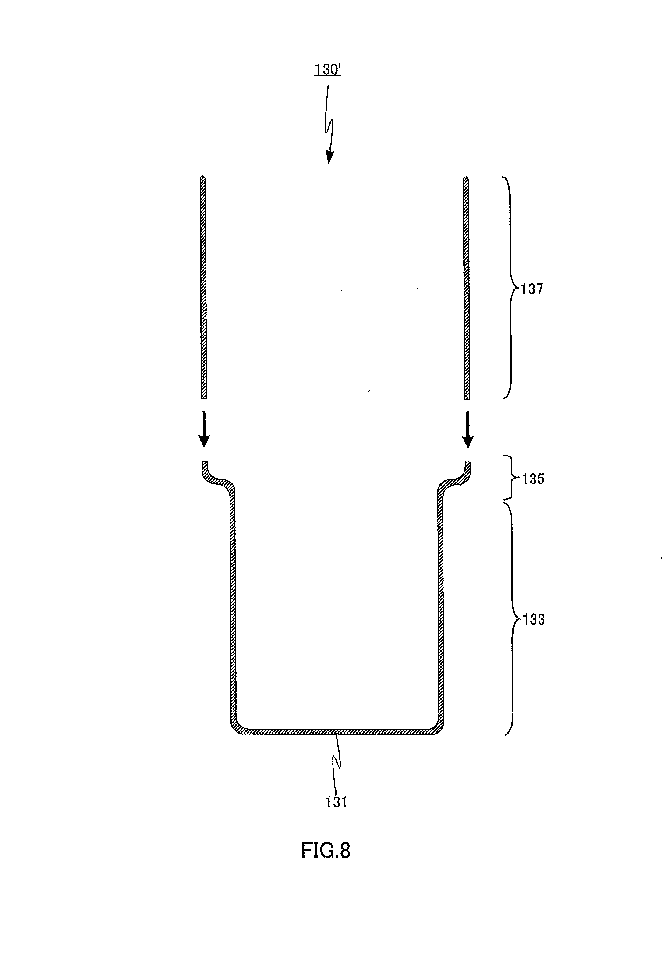

FIG.8 illustrates a part of the manufacturing process of outer cylinder 130'. As illustrated in FIG.8, outer cylinder 130' is manufactured by welding upper part 137 to center part 135 which is integrally manufactured with lower part 133 by drawing, Upper part 137 of outer cylinder 130' may be manufactured by, for example, longitudinal welding of a rolled metal plate. Since the temperature change is small near upper part 137 as described above, the welded joint is less likely to experience stress caused by temperature changes and therefore is less prone to deterioration. Thus, even when upper part 137 of outer cylinder 130' is manufactured by longitudinal welding of a rolled metal plate, upper part 137 does not suffer from deterioration.

As described above, according to the present embodiment, lower and center parts of an outer cylinder can be manufactured separately from an upper part of the outer cylinder, enabling lower and center parts of an outer cylinder to be integrally manufactured by drawing more simply,

The disclosure of Japanese Patent Application No.2010-000762, filed on January 5, 2010, including the specification, drawings and abstract, is incorporated herein by reference in its entirety.

### Industrial Applicability

The fuel processing device of the present invention is highly resistant to temperature changes and therefore is useful when incorporated in a residential co-generation system that undergoes a large number of repeated cycles of turning on and off.

### Reference Signs List

- 100, 100': Fuel processing device
- 110: Inner cylinder
- 115: Heater
- 117: Fuel gas flow channel
- 120: Center cylinder
- 130: Outer cylinder
- 131: Bottom plate
- 133: Lower part of outer cylinder
- 135: Center part of outer cylinder
- 136: All-around welded potion
- 137: Upper part of outer cylinder
- 139: Bent portion
- 140: Flange
- 210: Evaporator
- 211: Source inlet
- 220: Reformer
- 310: Reformed gas flow channel
- 320: Shift converter
- 321: Air inlet
- 330: Selective oxidizer
- 331: Fuel gas outlet
- 501, 511: Die
- 503, 513, 515, 517: Punch
- 505: Blank holder
- 507: Metal plate

## Claims

1. A fuel processing device comprising:
an inner cylinder having a bottom;
a center cylinder having no bottom, the center cylinder surrounding the inner cylinder and being disposed concentric with the inner cylinder;
an outer cylinder having a bottom, the outer cylinder surrounding the center cylinder and being disposed concentric with the inner cylinder and the center cylinder, wherein the outer cylinder includes a lower part, a center part and a upper part, the lower part including the bottom of the outer cylinder, the upper part having a larger bore diameter than the lower part and including an end opposite the bottom of the outer cylinder, the center part connecting together the lower part and the upper part, the center part and the lower part being free from any all-around welded joint;
a heater disposed inside the inner cylinder;
an evaporator configured to mix a steam and a methane-containing source gas to produce a mixed gas, the evaporator disposed between a upper part of the inner cylinder and a upper part of the center cylinder;
a reformer configured to convert the mixed gas into a reformed gas by a steam-reforming reaction, the reformer disposed between a lower part of the inner cylinder and a lower part of the center cylinder; and
a CO remover configured to remove carbon monoxide from the reformed gas, the CO remover disposed between the upper part of the center cylinder and the upper part of the outer cylinder.

2. The fuel processing device according to claim 1, wherein the center part and the lower part of the outer cylinder are integrally manufactured by drawing of a single metal plate.

3. The fuel processing device according to claim 1, wherein the upper part, the center part and the lower part of the outer cylinder are integrally manufactured by drawing of a single metal plate,

4. The fuel processing device according to claim 1, wherein the outer cylinder has the all-around welded joint between the center part and the upper part.

5. The fuel processing device according to claim 1, wherein the lower part of the outer cylinder has a bent portion connecting together a sidewall and the bottom of the outer cylinder, and the bent portion having a curvature radius of 2 mm or more.

6. The fuel processing device according to claim 1, wherein the center part of the outer cylinder has a bent portion, and the bent portion having a curvature radius of 2 mm or more.

7. The fuel processing device according to claim 1, wherein the reformer and the CO remover are spaced apart from each other in an axial direction of the inner cylinder.
